# EUROPÄISCHE PATENTANMELDUNG

(11) **EP 0 872 533 A2**
(43) Veröffentlichungstag der Anmeldung: **21.10.1998**
(21) Anmeldenummer: 98104162.7
(22) Anmeldetag: 09.03.1998
(51) Int. Cl.: C09J 131/04, C09J 177/04

(54) **Klebemittel für Histologische Gewebepräparate auf Glasobjektträgern**

(30) Priorität: 15.04.1997 DE 19715691
(71) Anmelder: Höfler, Heinz, Prof. Dr., 81675 München (DE)
(72) Erfinder: Höfler, Heinz, Prof. Dr., 81675 München (DE)
(74) Vertreter: Reinhard - Skuhra - Weise & Partner

(57) **Zusammenfassung**

Erfindungsgemäß wird ein verbessertes Klebemittel zur Fixierung von organischen Gewebeschnitten auf Objektträgern aus Glas bereitgestellt, das mindestens einen Kleber auf Polyvinylacetat-Basis und Poly-L-Lysin enthält.

## Beschreibung

Die Erfindung betrifft ein neues Klebemittel zur Fixierung organischer Gewebeschnitte auf Objektträgern, ein Verfahren zur Fixierung organischer Gewebeschnitte auf Objektträgern und die Verwendung des erfindungsgemäß bereitgestellten Klebemittels, insbesondere zur Fixierung organischer Gewebeschnitte auf Objektträgern, je aus Glas.

Zur feingeweblichen Beurteilung von organischem Gewebe mit dem Durchlichtmikroskop, sog. histologischen Schnitten, werden menschliche oder tierische Gewebe entweder nach Fixierung in Formalin und Einbettung in Paraffin oder nach direktem Schockgefrieren mit einem Mikrotommesser geschnitten. Hierdurch erhält man Gewebelagen von wenigen Mikrometern Dicke, welche sich nach entsprechenden Färbungen in der Durchlichtmikroskopie beurteilen lassen. Durch die minimale Dicke des Gewebes ist es möglich, einzelne Zellen ohne störende Überlagerungen zu studieren. Hierzu ist es notwendig, die Schnitte auf dünne Glasobjekträger aufzuziehen. Da sich das Gewebe selbst in seiner Eigenfarbe nur gering unterscheidet, müssen die Dünnschnitte anschließend durch chemische Reagenzien gefärbt werden. Zusätzlich ist es hierzu erforderlich, den auf das Glas aufgebrachten Schnitt von Paraffinresten zu befreien. Das Glas mit dem darauf befindlichen Gewebe wird hierzu durch eine Alkohol/Acetonreihe geführt und anschließend gefärbt. Abschließend erfolgt der Verschluß des Gewebes mit einem zweiten Deckgläschen. Der Schnitt ist jetzt zur Beurteilung fertig und dauerhaft geschützt.

Zur Beurteilung des Gewebes wird im allgemeinden eine Routinefärbung durchgeführt, häufig mit einer Kombination der Substanzen Hämatoxilin und Eosin, wobei wahlweise auch andere Färbesubstanzen und Hilfsmittel zugegeben werden können. Zur Beurteilung zusätzlicher Fragestellungen sind immunhistochemische Färbungen notwendig. Hierbei werden besondere Merkmale von Zellen, sog. Antigene, gezielt mit Antikörpern markiert und in einer Reihe weiterer verstärkender Anlagerungsreaktionen optisch sichtbar gemacht. Das gesuchte Antigen stellt sich dann, je nach dem gewählten Färbekomplex, z.B. rot oder braun dar.

Aufgrund der Fixierung mit Formalin und Einbettung in Paraffin gelingt es nicht, diese Antigene ohne Vorbehandlung des auf dem Objektträger befindlichen Materials darzustellen. Die Schnitte müssen hierzu entweder chemisch-enzymatisch oder thermisch angedaut werden. Erst nach diesem Schritt lassen sich die Antigene durch die jeweils gewählten Antikörper markieren. Durch diese Andauungsschritte kommt es besonders bei den thermischen Verfahren durch Kochen oder Mikrowellenbehandlung zu einer heftigen Beanspruchung des Gewebes. Neben der thermischen Einwirkung entsteht zusätzlich eine mechanische Belastung der Schnitte durch das kräftige Aufsteigen von Luftblasen. Je nach Ursprung des Gewebes (Fettgehalt-Fasergehalt) kommt es zu einem Abschwimmen des Materials vom Glasobjektträger. Eine weitere Bearbeitung wird hierdurch unmöglich, das Gewebe ist für die Analyse verloren.

Die mechanisch weniger belastenden Verfahren der enzymatischen Andauung haben den wesentlichen Nachteil einer direkten Einwirkung auf die Zellproteine, so daß es hierbei zu einer Veränderungen der Proteine selbst, oder auch zu einer teilweise Zerstörung zellulärer Strukturen kommen kann. Dieses zeigt sich in einem fragmentierten Erscheinungsbild des Gewebematerials wie auch in unvollständiger Antigenerkennung durch das Markierungssystem.

Die grundsätzliche Problematik der mangelnden Haftung der Dünnschnitte auf Glas ist seit Jahrzehnten bekannt. Es wurden verschiedene Lösungsansätze gewählt, um diese Nachteile zu vermeiden.

Die Behandlung der Glasobjektträger mit Repel-Silane glättet die Glasoberfläche und ermöglicht so ein verbessertes Aufliegen des Präparates. Es gibt eine geringere Ausbildung von möglichen Ansatzstellen zum Abheben des Materials (kleine Luftblasen).

Eine weitere Strategie ist die Behandlung der Gläser mit Poly-L-Lysin. Es wird hierdurch eine klebstoffartige Vernetzung der Struktur der Glasoberfläche mit dem organischen Gewebe erreicht.

Auch eine Kombination beider Verfahren ist denkbar und wird in Praxi durchgeführt. Nach eigenen Beobachtungen ergibt sich jedoch auch hierbei, besonders bei fetthaltigem Gewebe wie z.B. Geweben der Brustdrüse oder gallertartigen Tumoren, in 20-80% ein Verlust von beurteilbarem Gewebe.

Es werden hierdurch oft mehrere Schnitte mit nachfolgenden Andauungs- und Färbedurchgängen notwendig. Zum Teil muß der Andauungsvorgang zugunsten der Adhäsion deutlich verkürzt werden. Hierdurch entsteht wiederum eine deutlich geringere der oftmals sogar fehlende Antigenmarkierung und möglicherweise eine Beeinträchtigung besonders der quantitativen Beurteilbarkeit bestimmter Zellmerkmale und damit ein verfälschtes oder irreführendes bzw. nicht beurteilbares Ergebnis. Zudem ist eine standardisierte Reaktion im Vergleich mit anderen Präparaten bei Untersuchungsserien nicht möglich.

Es ist eine Aufgabe der vorliegenden Erfindung, ein neues Klebemittel zur Fixierung von organischen Gewebeschnitten auf Objektträgern, insbesondere auf Glas, bereitzustellen, daß die aus dem Stand der Technik bekannten Nachteile vermeidet.

Diese Aufgabe wird erfindungsgemäß durch die im Anspruch 1 näher gekennzeichneten Merkmale gelöst. Das erfindungsgemäße Verfahren nutzt dieses neu bereitgestellte Klebemittel.

Die Abbildungen, die die Erfindung näher beschreiben, zeigen:
- Abb. 1: Vergleich zwischen geklebten und ungeklebten histologischen Gewebepräparaten. Erfindungsgemäß haften Kleber/Poly-L-Lysin behandelte Gewebeschnitte (a und c) wesentlich besser als herkömmlich behandelte Schnitte (b und d).
- Abb. 2: Das neue Klebemittel kann die Hintergrundmarkierung einer immunhistochemischen Reaktion vermindern. Diese Färbeartefakte sind keiner eindeutigen Struktur zuzuordnen und finden sich über den gesamten Schnitt verteilt. a, geklebt; b, ungeklebt.

Erfindungsgemäß wurde nach Durchführung einer Vielzahl von Versuchen festgestellt, daß überraschenderweise eine Kombination aus Poly-L-Lysin und einem Kleber auf der Basis eines Vinylacetat-Ethylen-Copolymeren, der keine organischen Lösungsmittel und Weichmacher aufweist und wobei das Lösungsmittel Wasser ist die seit langem bekannten Nachteile hervorragend überwindet. Bevorzugt eignen sich milchige Dispersionskleber. Derartige Kleber sind kommerziell erhältlich, Beispiele hierfür sind Pritt®-Bastelkleber und UHU®. Ein Merkblatt über die wichtigsten Parameter zu UHU 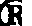 -Bastelkleber liegt der Anmeldung bei.

Das Mischungsverhältnis Kleber : Poly-L-Lysin liegt in einem Bereich von 1 : 1 bis 1 : 10, bevorzugt bei 1 : 5 und insbesondere bevorzugt bei etwa 1 : 1. Die Zumischung von Wasser als Ersatz von Poly-L-Lysin ergibt deutlich schlechtere Ergebnisse. Die Mischungsreihenfolge ist unerheblich, wobei jedoch das Zumischen von Poly-L-Lysin zum Kleber bei Zubereitung von Hand praktikabler ist.

Der erfindungsgemäß verwendbare Kleber weist bevorzugt eine Viskosität von 40-150 dPa·sec auf, weiterhin bevorzugt eine Viskosität von 50-130 dPa·sec.

Das erfindungsgemäße Klebemittel aus Vinylacetat-Kleber und Poly-L-Lysin ermöglicht eine sichere und dauerhafte Aufbringung histologischer Gewebeschnitte von beliebiger Dicke auf handelsübliche Objektträger, bevorzugt aus Glas, wobei die Objektträger entweder vorbehandelt oder nicht vorbehandelt sein können. Das Klebemittel wird auf auf einen Glasobjektträger aufgebracht, gleichmäßig verteilt, und anschließend wird der hisologische Gewebeschnitt auf den so behandelten Objektträger aufgebracht.

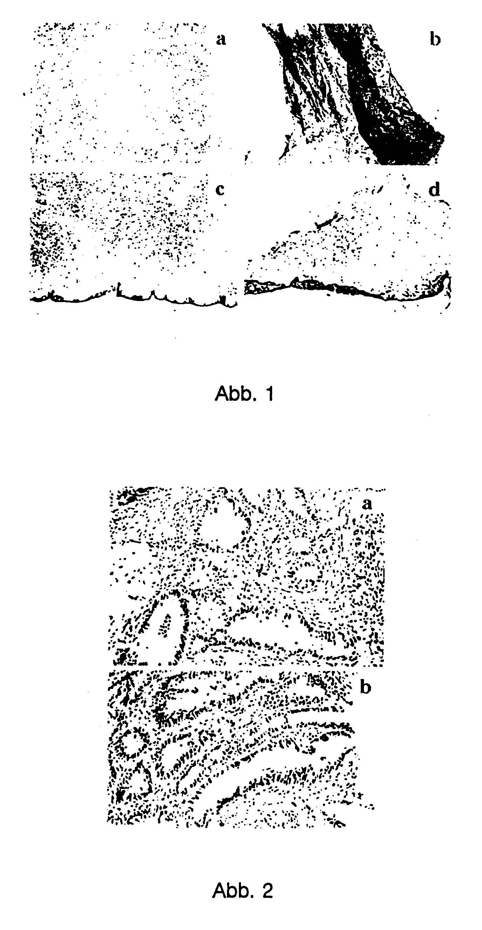

Nach dem Vermischen des Klebers mit dem Poly-L-Lysin wird die Mischung innig vermengt, beispielsweise durch Schütteln der Substanz auf einem Vortex®-Gerät. Eine andere Mischtechnik, beispielsweise von Hand oder auf Schüttler, ergibt identische Ergebnisse. Die Lösung ist damit gebrauchsfertig und erneutes Aufschütteln nicht notwendig. Zur Sicherung der Ergebnisse wurde eine Versuchsreihe mit verschiedenen Einzelsubstanzen und verschiedenen Objektgläsern durchgeführt. Die Wahl des Objektglases selbst hatte auf das Ergebnis nach Andauung und Immunnistochemie keinen Einfluß. Das alleinige Aufbringen des Gewebes mit Poly-L-Lysin zeigte gegenüber einer unvorbehandelten Oberfläche eine geringere Tendenz abzuschwimmen, war jedoch gegenüber der von uns beschriebenen Substanz deutlich benachteiligt (vergl. Abb. 1). Das alleinige Aufbringen des reinen Klebstoffes zeigte sich im Experiment als zu viskös und hatte eine unebene Lage des zu beurteilenden Materials zur Folge. Erst die Kombination des dünnflüssigen Poly-L-Lysins mit dem visköseren Klebemittel ergab den gewünschten Effekt optimaler Arbeitsbedingungen.

Das Auftragen der Klebemischung erfolgt durch Auftropfen einer geeigneten Menge, beispielsweise von ca. 100 Mikrolitern, auf das Objektträgerglas. Der Tropfen wird anschließend, vergleichbar dem Ausstreichen einer zytologischen Gewebeprobe oder eines Bluttropfens für die Auszählung von einzelnen Zellen, mit einem zweiten Objektträger verstrichen. Grundsätzlich ist auch ein maschinelles Auftragen denkbar. Anschließend erfolgt mit dem so vorbereiteten Glas das Auffischen des Gewebeschnittes aus dem Heizbad. Nach weiterer Bearbeitung ist das Ergebnis in der Durchlichtmikroskopie ein klares, optisch neutrales Bild mit entsprechendem Nachweis spezifischer Färbung.

Im Vergleich zu den Klebemitteln aus dem Stand der Technik weist das erfindungsgemäß bereitgestellte Klebemittel nicht nur eine sichere Adhäsion des Gewebes an den Objektträger auf, sondern auch noch eine erhebliche Reduzierung oder sogar eine Beseitigung eines störenden Hintergrundes, der üblicherweise durch die Komponenten der immunhistochemischen Reaktion entsteht. Offensichtlich kommt es bei den weniger adhäsiven Schnitten zu einer Ausbildung winziger Kammern zwischen Glas und Gewebe. Hier sammeln sich verschiedene Produkte der Färbereaktion an und bewirken in der Betrachtung der Schnitte störende Färbeartefakte (Abb. 2). Diese Färbeartefakte sind eindeutig keiner erkennbaren Struktur zugeordnet und finden sich frei über den Schnitt verteilt. Im Gegensatz hierzu ist die spezifische immunhistochemische Färbung eindeutig und reproduzierbar morphologischen Strukturen zuordnen (z.B. Zellmembran).

Das Ergebnis bei Anwendung des neuen Klebemittels ist somit zum einen standardisierbar durch exakt identische Demaskierungsreaktion (z.B. 2x7 Minuten Mikrowellenandauung bei 600 Watt Leistung, bzw. 20 Minuten Kochen im Dampfkochtopf) wie auch im optischen Vergleich von deutlich verbesserter Nachvollziehbarkeit der Markierung bei nahezu vollständigem verschwinden störender Hintergrundfärbung.

Das Klebemittel eignet sich in hervorragender Weise zum Fixieren sämtlicher histologischer Präparate (organischer Gewebeschnitte von Mensch und Tier) auf unbehandelten wie auch vorbehandelten Glasobjektträgern zur Vorbereitung von Routinefärbungen wie auch in besonderem Maße zur Durchführung chemisch-enzymatischer und thermischer Antigendemaskierung als Vorbereitung immunhistochemischer Färbemethoden. Die Anwendung ist zeitlich von geringem Aufwand und einfach handhabbar und dadurch in der Routine einsetzbar. Eine Veränderung spezifischer Färbung durch das Klebemittel ist nicht beobachtet worden, es eignet sich somit für sämtliche Färbesysteme.

Die Anwendung des Klebemittels erhöht deutlich die diagnostische Sicherheit und ermöglicht die Vergleichbarkeit verschiedener Gewebestypen in größeren Serien wie auch im direkten Vergleich einzelner Proben eines Präparates.

Nachfolgend wird die Erfindung anhand von Ausführungs- und Vergleichsbeispielen näher beschrieben.

### Material und Methoden

Es wurden 80 ungeklebte Schnitte mit 60 geklebten Paraffinschnitten verglichen. Hierbei wurden auch unterschiedliche Gewebetypen untersucht, wie beispielsweise fettreiches Mammagewebe und muskelhaltiges Magengewebe. Nach der **herkömmlichen Methode** werden die Gewebeschnitte direkt mit dem nicht vorbehandelten Objektträger (allenfalls silanisiert) aus dem warmen Streckwasserbad herausgehoben und getrocknet. Bei der **erfindungsgemäßen**, verbesserten Anhaftungsmethode wird ein Tropfen (entspricht ca. 100 µl) vom Klebstoffgemisch Polyvinylacetatdispersion/Poly-L-Lysin (1:1) auf den Objektträger mit einem Glasspatel getupft und mit einem zweiten Objektträger verstrichen, indem man den Tropfen an der Objektträgerkante verlaufen läßt und dann über den Objektträger schiebt. Es ist hierbei das Auftragsverfahren nicht wesentlich, das Ergebnis sollte jedoch ein dünner gleichmäßiger Klebemittelfilm sein. Eine entsprechende Vorrichtung zum Aufbringen des Klebers ist denkbar. Solange der Klebstoff noch feucht ist, wird dann der Schnitt mit dem Objektträger aus dem Heizbad gehoben und auf eine Heizplatte zum Antrocknen gelegt. Danach trocknen die Schnitte über Nacht (16 Stunden) bei 42°C im Brutschrank. An allen Testschnitten wurde eine Streptavidin-Biotin-Immunhistochemie mit nachfolgender DAB-Detektion durchgeführt. Dieses Vorgehen entspricht dem allgemeinen Laborstandard und ist von dem Klebevorgang unabhängig. Dazu wurde nach folgendem Protokoll vorgegangen:
-> Entparaffinierung durch Einstellen der Schnitte in Xylol für 2 x 10 Minuten.
-> Weitere Bearbeitung der Schnitte mittels Durchzug durch eine absteigende Alkoholreihe: Ethanol 100%-100%-96%-70%-50%-Aqua dest. jeweils für 2 Min.
-> in PBS-Puffer (=Phosphate Buffered Saline, bestehend aus Na₂HPO₄x2H₂O, KH₂PO₄ und NaCl ; pH-Wert: 7,2-7,4
-> Mikrowellen-Andauung: die Schnitte werden mit einem Citratpuffer (pH 6,0) für 2 x 5 Minuten bei max. Leistung (=850 Watt) in der Mikrowelle (Fa. Siemens) gekocht.
-> Nach 5-10 minütiger Abkühlung im Citratpuffer kommen die Schnitte wieder in PBS
-> Blocken von endogener Peroxidase: dazu werden die Schnitte für 15 Min. in 1% H₂O₂ gestellt
-> 3 x 2 Min. PBS-Waschen
-> Inkubation des Primärantikörpers (wahlweise 2 Stunden Raumtemperatur oder über Nacht bei 4°C)
-> 3 x 2 Min. PBS-Waschen
-> Inkubation des biotinylierten Sekundärantikörpers (aus dem Vectastain-Elite-ABC-Kit der Firma Camon) für 30 Min. Raumtemp.
-> 3 x 2 Min. PBS-Waschen
-> Inkubation des Avidin-Peroxidase-Komplexes (auch im Kit enthalten) für weitere 30 Min. bei Raumtemperatur
-> 3 x 2 Minuten PBS-Waschen
-> Detektion mit DAB-Fast-Tabletten von der Firma Sigma: Inkubationszeit beträgt 20 Minuten bei Raumtemperatur
-> letzte PBS-Waschung (3 x 2 Min.)
-> Kerngegenfärbung mit Hämalaun: Schnitte in Hämalaun eintauchen
-> unter fließendes Leitungswasser halten ("bläuen")
-> entwässern mittels Durchzug der Schnitte durch eine aufsteigende Alkoholreihe Ethanol 70%, 96%, 100%, Xylol
-> Die Präparate werden mit Pertex-Schnelleindeckmittel eingedeckt

Die beschriebene Klebemethode eignet sich auch für die weitere Bearbeitung im Färbeautomaten.

### Neben dem Vergleich geklebt/ungeklebt wurde zusätzlich noch untersucht:

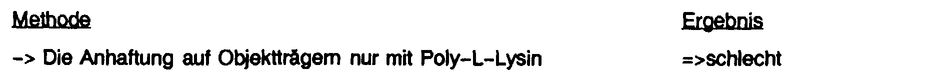

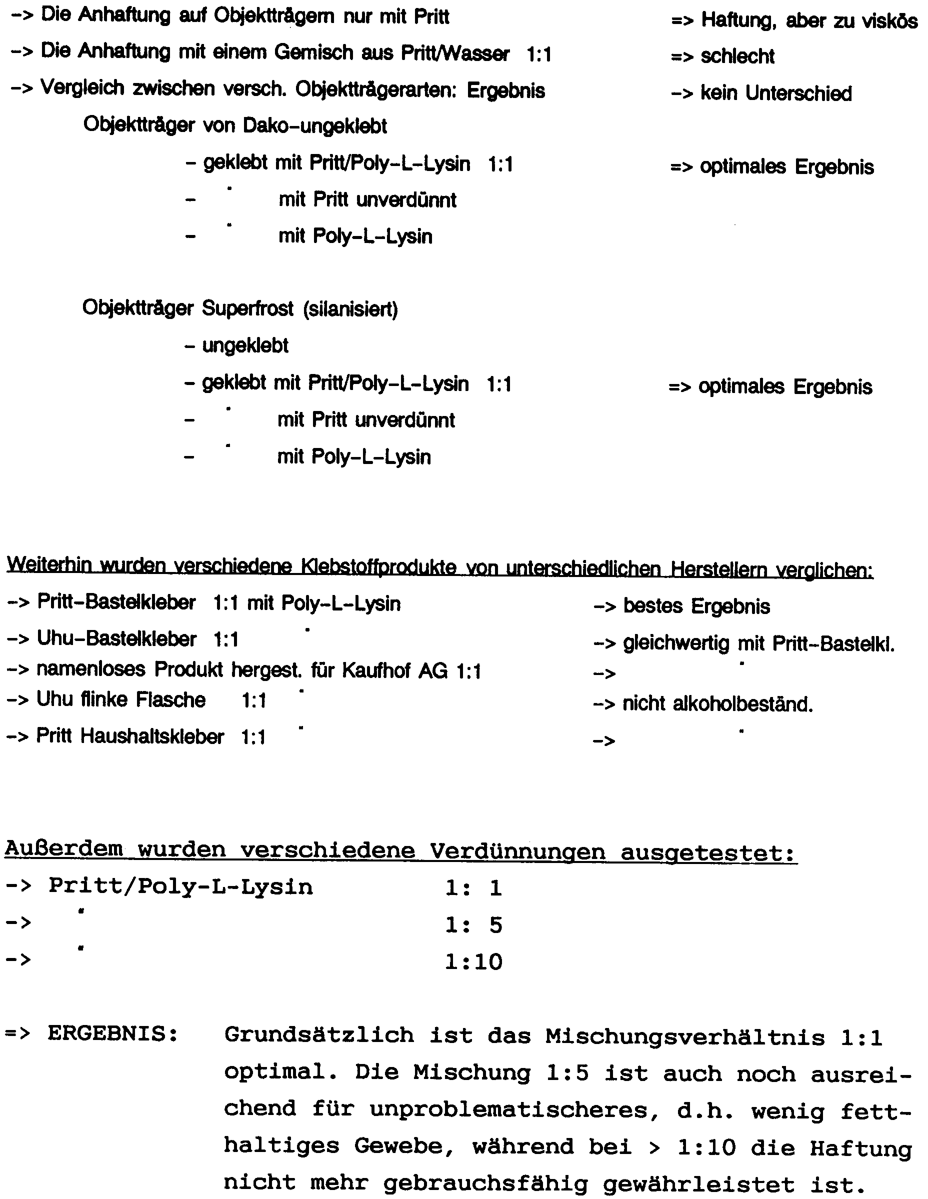

UHU Bastelkleber ist ein schnell abbindender lösemittel- und weichmacherfreier Dispersionsklebstoff für vielseitige Anwendung beim Basteln.

### Spezifikation:

- Aussehen:: milchig, weiß
- Viskositat (dPa·sec.):: 65-115
- Basis:: Vinylacetat-Ethylen-Copolymer
- Lösungsmittel:: Wasser
- Festkörpergehalt (%):: ca. 53
- Dichte (g/cm³):: 1,06
- pH-Wert:: 4,0
- Flammpunkt:: keiner
- Gefahrenklasse:: keine
- Kennzeichnung gemäß Gefahrstoffverordnung:: nicht kennzeichnungspflichtig

### Eigenschaften:

UHU Bastelkleber bindet schnell ab und trocknet transparent auf. Aufgrund seines breiten Anwendungsspektrums eignet sich für alle gängigen Bastelarbeiten. Auch auf schlecht zu beklebenden Kunststoff-und Lackoberflächen wird eine ausreichende Haftung erzielt. Es können die meisten Materialien verklebt werden, soweit eines der zu verklebenden Teile Wasser aufnehmen bzw. durchlassen kann. UHU Bastelkleber klebt Papier, Pappe, Holz, Kork, Leder (nicht geeignet für Bekleidungsleder), Filz, Stoff untereinander sowie auf vielen Kunststoffen, Metall, Schichtstoffplatten und Stein.

### Physiologische Eigenschaften:

Der getrocknete Klebstoff ist physiologisch unbedenklich.

### Verarbeitung:

Die Klebeflächen sollten sauber, trocken und fettfrei sein. Der Klebstoffauftrag erfolgt in der Regel einseitig. Die offene Zeit beträgt je nach Auftragsmenge und Saugfähigkeit der zu verklebenden Teile 3 bis 10 Minuten. Teile zusammenfügen solange der Klebstoff noch feucht ist.

### Reinigung:

Frischer UHU Bastelkleber kann mit Wasser entfernt werden. Abgetrocknete Klebstoffflecken sind wasserunlöslich und nur sehr schwer mit Aceton oder Nitroverdünner zu lösen.

### Vorsichtsmaßnahmen:

Vorsichtsmaßnahmen sind weder bei Verarbeitung noch bei Lagerung oder Versand erforderlich. Besondere Hinweise: Vor Frost schützen.

Die obigen Angaben sind das Ergebnis sorgfältig durchgeführter Untersuchungen. Dieses Merkblatt soll Sie bei Klebearbeiten nach unserem besten Wissen beraten. Für die Ergebnisse und Schäden jeder Art können wir im jeweiligen Anwendungsfall keine Verantwortung Öbernehmen, da sich bei den vielfältigen Möglichkeiten (Werkstofftypen, Werkstoffkombinationen und Arbeitsweise) die mitspielenden Faktoren unserer Kontrolle entziehen. Eigene Prüfungen und Versuche sind durchzuführen. Eine Gewährleistung kann nur auf die immer gleichbleibend hohe Qualität unseres Erzeugnisses übernommen werden.

## Patentansprüche

1. Klebemittel für histologische Gewebepräparate, enhaltend zumindest Poly-L-Lysin und einen Kleber auf Polyvinylacetat-Basis.

2. Klebemittel nach Anspruch 1, dadurch gekennzeichnet, daß der Kleber auf der Basis eines vinylacetat-Ethylen-Copolymeren ist, er keine organischen Lösungsmittel und Weichmacher aufweist und das Lösungsmittel des Klebers Wasser ist. ist.

3. Klebemittel nach Anspruch 2, dadurch gekennzeichnet, daß der Kleber ein milchiges Aussehen besitzt.

4. Klebemittel nach Anspruch 2 oder 3, dadurch gekennzeichnet, daß er ein UHU 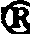 -Bastelkleber oder ein Pritt 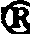 -Bastelkleber ist.

5. Klebemittel nach einem oder mehreren der vorhergehenden Ansprüche, dadurch gekennzeichnet, daß der Kleber eine Viskosität von 40-150 dPa·sec., bevorzugt von 50-130 dPa·sec. aufweist.

6. Klebemittel nach einem oder mehreren der vorhergehenden Ansprüche, dadurch gekennzeichnet, daß das Mischungsverhältnis von Kleber : Poly-L-Lysin in einem Bereich von 1:1 bis 1:10 liegt.

7. Klebemittel nach Anspruch 6, dadurch gekennzeichnet, daß das Mischungsverhältnis von Kleber : Poly-L-Lysin in einem Bereich von 1:2 bis 1:5, bevorzugt bei 1:1, liegt.

8. Verfahren zur Fixierung von organischen Gewebeschnitten auf Objektträgern aus Glas, dadurch gekennzeichnet, daß ein Klebemittel nach einem oder mehreren der vorhergehenden Ansprüche auf einen Glasobjektträger aufgebracht, gleichmäßig verteilt und anschließend der histologische Gewebeschnitt auf den so behandelten Objektträger aufgebracht wird.

9. Verfahren zur Herstellung des Klebemittels nach einem oder mehreren der vorhergehenden Anprüche, dadurch gekennzeichnet, daß Poly-L-Lysin und ein Kleber auf Polyvinylacetatbasis in Dispersion miteinander vermischt werden.

10. Verwendung eines Klebemittels, enthaltend mindestens Poly-L-Lysin und einen Kleber auf Polyvinylacetatbasis, zur Fixierung von organischen Gewebeschnitten auf Glasobjektträgern.
